(19) Europäisches Patentamt
European Patent Office
Office européen des brevets

(11) **EP 1 935 494 B1**

(12) **EUROPEAN PATENT SPECIFICATION**

(45) Date of publication and mention
of the grant of the patent:
**29.12.2010 Bulletin 2010/52**

(51) Int Cl.:
***B01L 3/00*** (2006.01)

(21) Application number: **07120247.7**

(22) Date of filing: **08.11.2007**

(54) **Micro total analysis chip and micro total analysis system**

Gesamtmikroanalysechip und Gesamtmikroanalysesystem

Micropuce d'analyse totale  et microsystème d'analyse totale

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **13.11.2006 JP 2006306490**

(43) Date of publication of application:
**25.06.2008 Bulletin 2008/26**

(73) Proprietor: **Konica Minolta Medical & Graphic, Inc.**
**Hino-shi,**
**Tokyo 191-8511 (JP)**

(72) Inventors:
• **Higashino, Kusunoki,**
**Konica Minolta Technology Center, Inc.**
**Tokyo 191-8511 (JP)**
• **Nakajima, Akihisa**
**Tokyo 191-8511 (JP)**
• **Sando, Yasuhiro,**
**c/o Konica Minolta Technology Center, Inc.**
**Tokyo 191-8511 (JP)**
• **Aoki, Youichi,**
**c/o Konica Minolta Technology Center, Inc.**
**Tokyo 191-8511 (JP)**

(74) Representative: **Henkel, Feiler & Hänzel**
**Patentanwälte**
**Maximiliansplatz 21**
**80333 München (DE)**

(56) References cited:
**EP-A- 1 705 543      WO-A-00/58719**
**WO-A-99/60397**

**Description**

**BACKGROUND OF THE INVENTION**

The present invention relates to a micro total analysis chip and a micro total analysis system, and specifically relates to such the micro total analysis chip and the micro total analysis system that is provided with a sample inlet port to inject a sample from outside and a sample reservoir to accommodate the sample, injected into the sample inlet port, in it.

In recent years, due to the use of micro-machine technology and microscopic processing technology, systems are being developed in which devices and means (for example pumps, valves, flow paths, sensors or the like) for performing conventional sample preparation, chemical analysis, chemical synthesis and the like are caused to be ultra-fine and integrated on a single chip.

These systems are called μ-TAS (Micro Total Analysis System), bioreactor, lab-on-chips, and biochips, and much is expected of their application in the fields of medical testing and diagnosis, environmental measurement and agricultural manufacturing. In reality, as seen in gene screening, in the case where complicated steps, skilful operations, and machinery operations are necessary, a microanalysis system which is automatic, has high speed and is simple is very beneficial not only in terms of reduction in cost, required amount of sample and required time, but also in terms of the fact that it makes analysis possible in cases where time and place cannot be selected.

However, in the inspection and measurement performed by employing the micro total analysis system mentioned in the above, when introducing a sample, such as a test specimen, a chemical reagent, etc., into the micro total analysis chip from the outside, if the injection amount of the specimen liquid varies, an air gap is liable to remain in the sample reservoir. This air gap has been one of factors to deteriorate an accuracy of the liquid transportation, since the air gap has acted as an air dumper.

To overcome the abovementioned drawback, for instance, Patent Document 1 (Tokkai 2006-126206, Japanese Non-Examined Patent Publication) set forth a method for performing a stable liquid transportation, the method including the steps of: introducing a sample, such as a blood, etc., dropped onto an inlet opening, into a sample retaining chamber by using the capillarity force generated on the surface of the flowing path onto which a certain surface treatment is applied; closing the inlet opening with a cover; and pushing out the sample from the upstream side of the sample retaining chamber by employing an air pressure.

According to the method set forth in Patent Document 1, however, although it may be possible to stabilize an amount of liquid to be transported, by contriving shapes and liquid velocities, such as a capacity of the liquid flowing path, a surface area, or the like, it has been difficult to make the liquid transporting velocity constant.

**SUMMARY OF THE INVENTION**

To overcome the abovementioned drawbacks in conventional micro total analysis chips and micro total analysis systems, it is one of objects of the present invention to provide a micro total analysis chip and a micro total analysis system, which makes it possible not only to stabilize the liquid transportation amount and the liquid conveying velocity of the sample liquid, such as a reagent, a specimen, etc., but also to provide the micro total analysis chip and the micro total analysis system, each of which makes it possible to improve the accuracy of analysis concerned.

Accordingly, at least one of the objects of the present invention can be attained by a micro total analysis chip as defined in claim 1 and by a micro total analysis system as defined in claim 5.

According to another embodiment of the present invention, in the micro total analysis system, the micro total analysis chip further includes: a second water repellent valve that is disposed between the sample liquid reservoir and the second connecting section; and a third water repellent valve that is disposed between the sample liquid reservoir and the second sample liquid conveying path, and when the first liquid conveying device conducts a liquid conveying operation, the first liquid conveying device conveys the sample liquid with a liquid conveying pressure being lower than a liquid retaining force generated by each of the second water repellent valve and the third water repellent valve, so as to fully fill the sample liquid reservoir with the sample liquid.

According to still another embodiment of the present invention, in the micro total analysis system , the micro total analysis chip further includes: a high resistance section that is disposed at the first sample liquid conveying path, to prevent the sample liquid, accommodated in the sample liquid reservoir, from flowing backward to the sample liquid injecting section, when the second liquid conveying device conducts a liquid conveying operation.

According to still another embodiment of the present invention, in the micro total analysis system , when the sample liquid, accommodated in the sample liquid reservoir as a result of a liquid conveying operation conducted by the second liquid conveying device, is conveyed in the downstream direction through the second sample liquid conveying path, the first liquid conveying device is operated with a liquid conveying pressure being lower than that of the second liquid conveying device, so as to prevent the sample liquid, accommodated in the sample liquid reservoir, from flowing backward to the sample liquid injecting section.

According to still another embodiment of the present invention, in the micro total analysis system , at least one of the first liquid conveying device and the second liquid conveying device is a micro pump that employs a driving liquid to conduct a liquid conveying operation.

According to yet another embodiment of the present invention, the micro total analysis chip further includes: a air drain section to drain a part of air or all of the air residing in at least one of gaps, between the first connecting section and the sample liquid injecting section, between the second connecting section and the sample liquid reservoir, between the first connecting section and the sample liquid injecting section, and between the second connecting section and sample liquid reservoir.

## BRIEF DESCRIPTION OF THE DRAWINGS

Embodiments will now be described, by way of example only, with reference to the accompanying drawings which are meant to be exemplary, not limiting, and wherein like elements are numbered alike in several Figures, in which:

Fig. 1 shows a schematic diagram of a micro total analysis system, indicated as one of examples embodied in the present invention;
Fig. 2 shows a schematic diagram of an inspection chip, serving as the first embodiment;
Fig. 3 shows a timing chart indicating a liquid transporting operation to be conducted on an inspection chip, embodied in the present invention as the first embodiment;
Fig. 4(a) shows a cross sectional schematic diagram of an example of a piezo pump, Fig. 4(b) shows a plane view of the same and Fig. 4(c) shows a cross sectional schematic diagram of another example of a piezo pump;
Fig. 5 shows a schematic diagram of a first example of an inspection chip embodied in the present invention as the second embodiment;
Fig. 6 shows a schematic diagram of a second example of an inspection chip embodied in the present invention as the

second embodiment; and

Fig. 7 shows a schematic diagram of a third example of an inspection chip embodied in the present invention as the second embodiment.

## DETAILED DESCRIPTION OF THE PREFERRED EMBODIMENT

Referring to the drawings, the preferred embodiment of the present invention will be detailed in the following. However, the scope of the present invention is not limited to the embodiment described in the following. Further, in the drawings, the same reference number is attached to the same or similar sections or elements and duplicated explanations for them will be omitted.

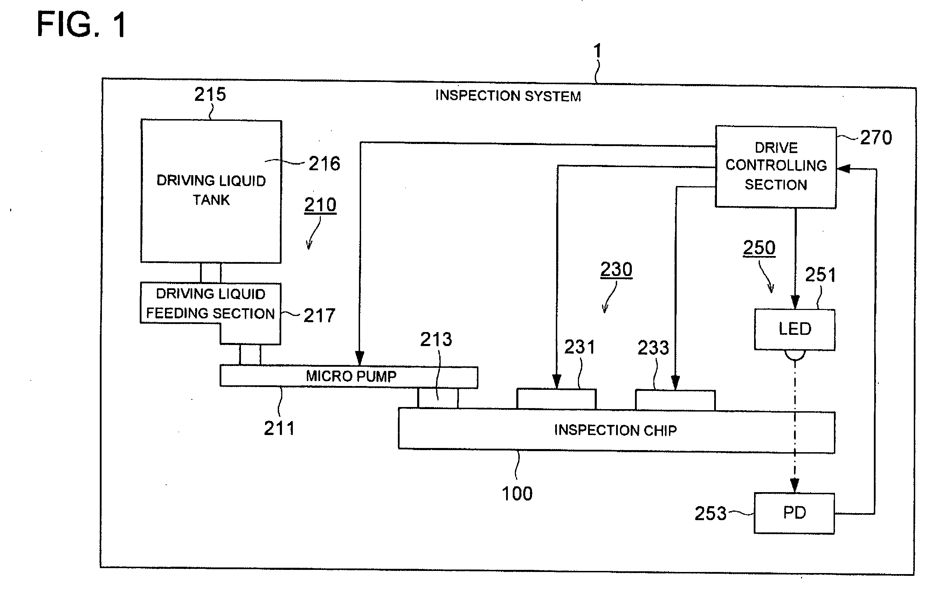

At first, referring to Fig. 1, the micro total analysis system embodied in the present invention will be detailed in the following. Fig. 1 shows a schematic diagram of the micro total analysis system, indicated as one of examples embodied in the present invention.

As shown in Fig. 1, an inspection system 1, serving as a micro total analysis system embodied in the present invention, is constituted by: an inspection chip 100, serving as a microchip embodied in the present invention; a micro pumping unit 210 to conduct a liquid transporting operation within the inspection chip 100; a heating and cooling unit 230 to accelerate or decelerate reactions occurring in the inspection chip 100; a detecting section 250 to detect a target substance included in the generated liquid acquired as a result of the reactions occurring in the inspection chip 100; a drive controlling section 270 to conduct various kinds of operations to be conducted in the inspection system 1, such as driving operations, controlling operations, etc.; etc.

The micro pumping unit 210 includes: a micro pump 211 to perform the liquid transporting operation; a chip connecting section 213 to connect the micro pump 211 and the inspection chip 100 with each other; a driving liquid tank 215 to store driving liquid 216 to be fed for conducting the liquid transporting operation; a driving liquid feeding section 217 to feed the driving liquid 216 from the driving liquid tank 215 to the micro pump 211; etc. The driving liquid tank 215 is detachable from the driving liquid feeding section 217, so as to make it possible to replenish the driving liquid 216. At least two pumps including a first pump 211a and a second pump 211b are formed on the micro pump 211, and can be driven either independently or in conjunction with each other. In this connection, the first pump 211a and the second pump 211b serve as a first liquid transporting device and a second liquid transporting device, respectively.

The heating and cooling unit 230 includes a cooling section 231 constituted by a Peltier element, etc., and a heating section 233 constituted by a heater etc. It is needless to say that the heating section 233 can be also constituted by a Peltier element, etc. The detecting section 250 is constituted by a LED (Light Emitting Diode) 251, a PD (Photo Detector) 253, etc., in order to optically detect the target substance included in the generated liquid acquired as a result of the reactions occurring in the inspection chip 100.

The inspection chip 100 is equivalent to one generally called an analysis chip, a micro reactor chip, etc., in which micro-channels, each serving as a liquid flowing path whose width and height are in a range of several $\mu$m - several hundreds $\mu$m, are fabricated on a substrate made of, for instance, a resin, a glass, a silicon, a ceramics, etc. The length and width dimensions of the inspection chip 100 are around several tens millimeters, respectively, and its height is around several millimeters as its typical size.

The inspection chip 100 and the micro pump 211 are connected to each other through the chip connecting section 213, so as to make the driving liquid 216 pass through between them. By driving the micro pump 211, various kinds of reagents and the sample specimen, contained in a plurality of reservoirs formed on the inspection chip 100, are conveyed by the driving liquid 216 flowing into the inspection chip 100 from the micro pump 211 through the chip connecting section 213.

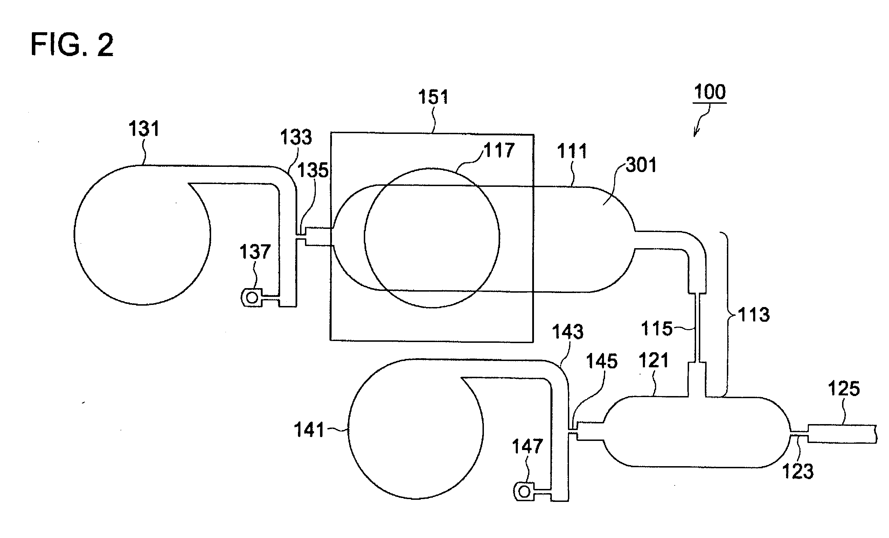

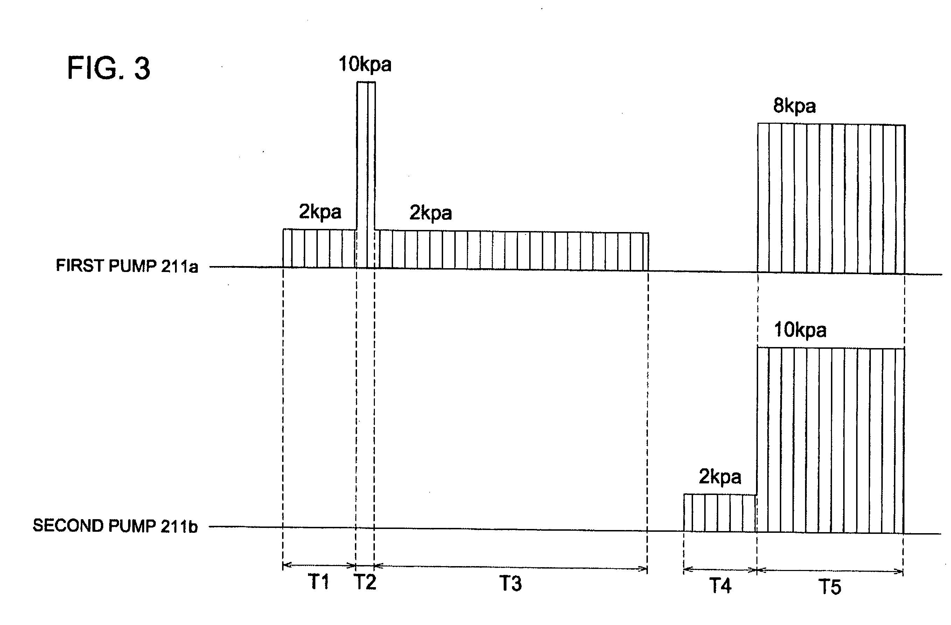

Next, referring to Fig. 2 and Fig. 3, the first embodiment of the inspection chip 100 embodied in the present invention will be detailed in the following. Fig. 2 shows a schematic diagram of the inspection chip 100, serving as the first embodiment. Described herein is an example of a configuration, which makes it possible to stabilize a transportation amount of the sample liquid and a transportation velocity of the sample liquid, by conducting the steps of: injecting the sample liquid, such as a specimen, a reagent, etc., into the sample injecting section from the sample injection opening; conveying the injected sample liquid so as to accommodate it into a sample reservoir; and further conveying the accommodated sample toward downstream direction.

As shown in Fig. 2, the inspection chip 100 is provided with: a first connecting section 131, which is coupled to the first pump 211a formed on the micro pump 211 through the chip connecting section 213; a first driving liquid flowing path 133 extending downstream from the first connecting section 131d, so as to transport the driving liquid 216 towards a downstream direction; a sample liquid injecting section 111 extending downstream from the first driving liquid flowing path 133 and provided with a sample liquid injection opening 117 for injecting a sample liquid 301, such as a specimen, a reagent, etc., from outside; a first sample liquid conveying path 113 extending downstream from the sample liquid injecting section 111, so as to transport the sample liquid 301, injected into the sample liquid injecting section 111, towards a downstream direction; a second connecting section 141, which is coupled to the second pump 211b formed on the micro pump 211 through the chip connecting section 213; a second driving liquid flowing path 143 extending downstream from the second connecting section 141, so as to transport the driving liquid 216 towards a downstream direction; a sample liquid reservoir 121 extending downstream from the second driving liquid flowing path 143 and the first sample liquid conveying path 113, so as to accommodate the sample liquid 301, conveyed from the first sample liquid conveying path 113, in it; a second sample liquid conveying path 125 extending downstream from the sample liquid reservoir 121, so as to transport the sample liquid 301, accommodated into the sample liquid reservoir 121, towards a downstream direction; etc., all of which are fabricated on the surface of the inspection chip 100.

Further, a first water repellent valve 135, a second water repellent valve 145 and a third water repellent valve 123 are disposed at a position located between the first driving liquid flowing path 133 and the sample liquid injection opening 117, another position located between the second driving liquid flowing path 143 and the sample liquid reservoir 121 and still another position located between the sample liquid reservoir 121 and the second sample liquid conveying path 125, respectively.

In this connection, hereinafter, the water repellent valve is defined as such a fine liquid flow path (micro channel) that has a hydrophobicity property and a narrow cross sectional area, so that the flow of the liquid can be stopped thereat by the water repellent force caused by the narrowed micro channel structure, when the liquid is conveyed under a pressure smaller than a predetermined pressure. The width of each of the first water repellent valve 135, the second water repellent valve 145 and the third water repellent valve 123 is set at around 25 $\mu$m, and the liquid retaining force generated by the water repellent valve having the above dimension is around 4 kPa.

Further, the first sample liquid conveying path 113 is provided with a first high resistance section 115 to prevent the sample liquid 301 from flowing backward when the sample liquid 301 is conveyed from the sample liquid reservoir 121 to the second sample liquid conveying path 125 according to the liquid transporting operation conducted by the second pump 211b, detailed later. It is necessary to set a liquid flow resistance of the first high resistance section 115 at a high resistance value, to such an extent that a backward flow amount toward the sample liquid injecting section 111 is sufficiently smaller than a liquid transporting amount toward the second sample liquid conveying path 125, when the sample liquid 301 is conveyed from the sample liquid reservoir 121 to the second sample liquid conveying path 125 by the second pump 211b. Accordingly, it is preferably desired that the liquid flow resistance is set at such the high resistance value that makes the backward flow amount 1/10 of the liquid transporting amount.

In the present embodiment, by setting the liquid flow path resistance of the first high resistance section 115 at a value more than around $40 \times 10^{12}$ N*s/m$^5$, it is possible to set the backward flow amount at a value lower than 1/10 of the liquid transporting amount. When a coefficient of viscosity of the liquid is $1 \times 10^{-3}$ Pa*s (equivalent to that of water at 20°C), the dimensions of the first high resistance section 115 are set at around values of width: 25 $\mu$m, depth: 40 $\mu$m and length: 1.18 mm.

In this connection, the value of "liquid flow path resistance" is equivalent to a reciprocal number of the liquid flow amount per unit pressure to be applied to the liquid flow path. Concretely speaking, the value of "liquid flow path resistance" can be found by measuring the liquid flow amount when the liquid is flown by applying a predetermined pressure to an entrance of the liquid flow path, and dividing the current pressure by the value of the liquid flow amount. Specifically, if the liquid flow path is slender and long, and the laminar flow is dominant in the liquid flow path, as mentioned in the above example, the liquid flow path resistance value R can be found by employing the equation 1 (Eq. 1) shown as follow.

$$R = \int \frac{32 \times \eta}{S \times \phi^2} dL \quad \cdots \quad (Eq. \ 1)$$

where

$\eta$: coefficient of viscosity of the liquid,
S: cross sectional area of the liquid flow path,
$\phi$: equivalent diameter of the liquid flow path,
L: length of the liquid flow path.

Further, the equivalent diameter $\phi$ of the liquid flow path can be found by employing the equation 2 (Eq. 2) shown as follow.

$$\phi = (a \times b) / \{(a + b) / 2\} \ \text{----} \ Eq. \ 2$$

Still further, it is desirable that a air drain section 137 and a air drain section 147, for draining residual air remaining within the first driving liquid flowing path 133 and the second driving liquid flowing path 143, are disposed at an end portion of the first driving liquid flowing path 133 and an end portion of the second driving liquid flowing path 143, respectively. By draining the residual air remaining within the first driving liquid flowing path 133 and the second driving liquid flowing path 143, it becomes possible to eliminate the air residing at a gap between the driving liquid 216 fed from the micro pump and the sample liquid 301, and accordingly, it becomes possible to conduct the liquid transporting operation more accurately than ever.

The structure of each of the air drain section 137 and the air drain section 147 can be achieved by the fine pipe liquid flow path structure whose liquid flow path is narrowed. In addition, it is desirable that the inner surface of the fine pipe liquid flow path is finished as a water repellent wall, so that the capillarity phenomenon of the inner wall prevent the liquid from flowing outside from the fine pipe liquid flow path, though the air can be freely drained outside. The width of the fine pipe liquid flow path is set at, for instance, around 15 $\mu$m.

Alternatively, it is also applicable that each of the air drain section 137 and the air drain section 147 is shaped in a slender and lengthy pipe having a high liquid flow path resistance. According to this method, since only an extremely small amount of the liquid can leak from the air drain section due to the high resistivity of the liquid flow path, when the liquid reaches to the air drain section after the air is drained, it becomes possible to accurately transport the liquid concerned. For instance, by setting the liquid flow path resistance of this slender channel at around $1000 \times 10^{-12}$ (N*s/m$^2$), the leakage amount ratio can be reduced to 1% or a smaller percent, resulting in a possibility of the accurate liquid transporting operation. When the coefficient of viscosity of the liquid is $1 \times 10^{-3}$ Pa*s (equivalent to that of water at 20 °C), the dimensions of this high resistance section are set at around values of width: 10 $\mu$m, depth: 25 $\mu$m and length: 1.60 mm.

Referring to Fig. 3, the liquid transporting operation to be conducted on the inspection chip 100, embodied in the present invention as the first embodiment, will be detailed in the following. Fig. 3 shows a timing chart indicating the liquid transporting operation to be conducted on the inspection chip 100, embodied in the present invention as the first embodiment.

Initially, the sample liquid 301 is injected into the sample liquid injection opening 117, and then, the sample liquid injection opening 117 is sealed with a cover 151, such as an adhesive tape or the like. For instance, the diameter of the sample liquid injection opening 117 is set at around 3 millimeters, while the capacity of the sample liquid injecting section 111 is set at around 40 nm$^3$. For instance, since the injecting operation of the sample liquid 301 is achieved in such a manner that the operator uses Pipette to drip the liquid onto the sample liquid injecting section 111 by hand, the dripped amount of the sample liquid 301 is liable to vary to a certain extent. In this connection, for instance, by setting the capacity of the sample liquid reservoir 121 at 30 $nm^3$ being slightly smaller than that of the sample liquid injecting section 111, and by setting an allowance value of the dripped amount of the sample liquid 301 at a value in a range of 30 - 40 $nm^3$, it is possible to keep the variation of the dripped amount within a no problem range, even if some difference among individuals in the handling of Pipette exist.

After the sample liquid injection opening 117 has been sealed with the cover 151, at a time T1 shown in Fig. 3, the first pump 211a is driven by a relatively weak pressure of around 2 kPa so as to convey the driving liquid 216 from the first connecting section 131 to the first driving liquid flowing path 133. Then, at a time T2 shown in Fig. 3, by driving the first pump 211a with a high pressure exceeding the liquid retaining force of the first water repellent valve 135 (for instance, more than 10 kPa), the driving liquid 216 is made to pass through the first water repellent valve 135 and introduced into the sample liquid injecting section 111, so as to convey the sample liquid 301 residing in the sample liquid injecting section 111 to the sample liquid reservoir 121 through the first sample liquid conveying path 113.

After the driving liquid 216 has passed through the first water repellent valve 135, at a time T3 shown in Fig. 3, the first pump 211a is again driven by a relatively weak pressure of around 2 kPa, so as to convey the sample liquid 301 injected into the sample liquid injecting section 111 to the sample liquid reservoir 121 through the first sample liquid conveying path 113, until the sample liquid reservoir 121 is fully filled with the sample liquid reservoir 121. Then, when the level of the sample liquid 301 reaches to that of the second water repellent valve 145 and the third water repellent valve 123, both of which are disposed at both end portions of the sample liquid reservoir 121, the conveying operation of the sample liquid 301 is disabled by the liquid retaining forces caused by the water repellent property of the second water repellent valve 145 and the third water repellent valve 123.

Successively, at a time T4 shown in Fig. 3, the second pump 211b is driven by a relatively weak pressure of around 2 kPa, so as to convey the driving liquid 216 from the second connecting section 141 to the second driving liquid flowing path 143. Then, at a time T5 shown in Fig. 3, by driving the second pump 211b with a high pressure exceeding the liquid retaining force of the second water repellent valve 145 and the third water repellent valve 123 (for instance, more than 10 kPa), the driving liquid 216 is made to pass through the second water repellent valve 145 and introduced into the sample liquid reservoir 121, so as to make the sample liquid 301, residing in the sample liquid reservoir 121, pass through the third water repellent valve 123 and flow downstream from the second sample liquid conveying path 125.

After the driving liquid 216 has passed through the second water repellent valve 145, and the sample liquid 301, residing in the sample liquid reservoir 121, has passed through the third water repellent valve 123 and has flown into the second sample liquid conveying path 125, it is applicable that the second pump 211b is again driven by the relatively weak pressure of around 2 kPa, as indicated at the time T3 shown in Fig. 3. However, in the present embodiment, assuming that another water repellent valve (not shown in the drawings) exists at a further downstream position of the second sample liquid conveying path 125, the first pump 211a is continuously driven with a high pressure exceeding the liquid retaining force of the second water repellent valve 145 and the third water repellent valve 123 (for instance, more than 10 kPa).

Although a little amount of the sample liquid 301 flows backward towards the sample liquid injecting section 111 due to the effect of the liquid flow path resistance caused by the first high resistance section 115, a certain amount of the sample liquid 301 still flows backward and results in an error in the liquid transportation amount. Accordingly, to further reduce the backward flow, the first pump 211a is driven at the time T5 shown in Fig. 3, synchronized with the driving action of the second pump 211b, so that the first pump 211a serves as a backward flow preventing device. At this time, the driving pressure to be generated by the first pump 211a is set at such a value that is slightly weaker than that to be generated by the second pump 211b, so as to keep a balance between them, and as a result, it becomes possible to reduce the backward flow amount. For instance, in the present embodiment, by setting the driving pressure to be generated by this backward flow preventing device at 8 kPa, it becomes possible to suppress the backward flow amount to a value being equal to or lower than 1% of the total liquid transportation amount to be conveyed to the second sample liquid conveying path 125, and therefore, it becomes possible to implement the accurate operation for transporting the liquid downstream.

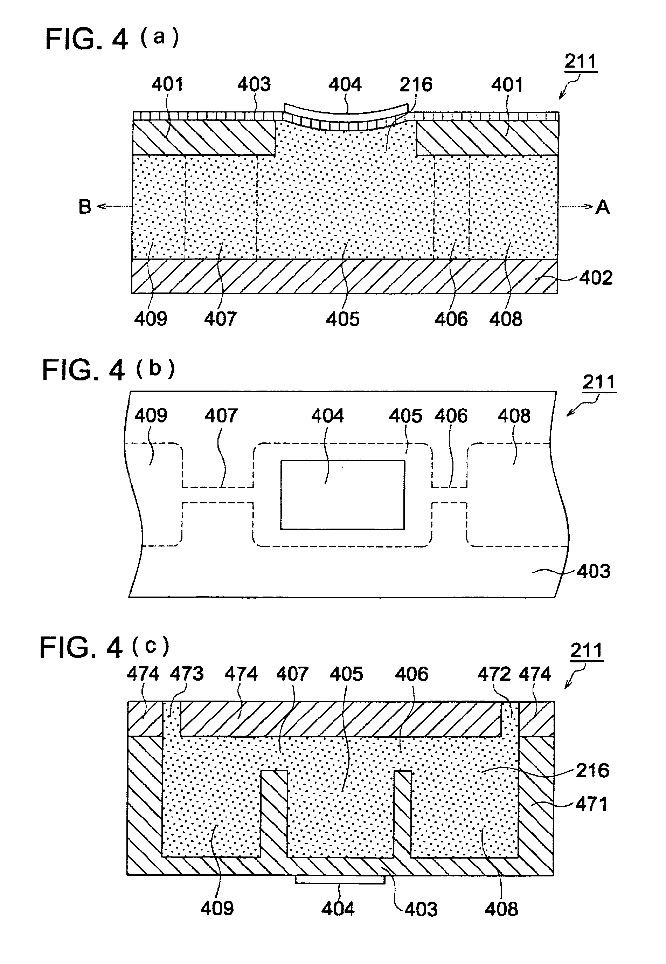

Next, referring to Fig. 4, an example of the micro pump 211, to be employed for the liquid transporting operation performed on the inspection chip 100 embodied in the present invention as the first embodiment, will be detailed in the following. Although various kinds of micro pumps, such as a check valve type pump in which a check valve is disposed at an inlet/outlet opening of a valve chamber provided with an actuator, etc., can be employed as the micro pump 211, a piezo pump is specifically preferable for this purpose. Figs. 4(a) - 4(c) show schematic diagrams indicating exemplary configurations of the micro pump 211. Fig. 4 (a) shows a cross sectional schematic diagram of an example of the piezo pump, Fig. 4(b) shows a plane view of the same and Fig. 4(c) shows a cross sectional schematic diagram of another example of the piezo pump.

As shown in Fig. 4(a) and Fig. 4(b), the micro pump 211 is provided with a first liquid chamber 408, a first liquid flow path 406, a pressurizing chamber 405, a substrate 402 on which a second liquid flow path 407 a second liquid chamber 409 are formed, an upper substrate 401 laminated on the substrate 402, a vibration plate 403 laminated on the upper substrate 401, a piezoelectric element 404 laminated on a side surface of the vibration plate 403 oposing to the pressurizing chamber 405, and a driving section (not shown in the drawings) to drive the piezoelectric element 404.

The micro pump 211 is so constituted that the two electrodes formed on the both side surfaces of the driving section and the piezoelectric element 404 are coupled to each other with a wiring line, such as a flexible cable, etc., so as to apply a driving voltage, generated by a driving circuit of the driving section, onto the piezoelectric element 404 through the wiring line concerned. When implementing the driving operation, the inner sections of the first liquid chamber 408, the first liquid flow path 406, the pressurizing chamber 405, the second liquid flow path 407, and the second liquid chamber 409 are filled with the driving liquid 216.

In an example of the micro pump 211, a photosensitive glass substrate having a thickness of 500 $\mu$m is employed as the substrate 402, and, by applying an etching treatment for etching it up to 100 $\mu$m, the first liquid chamber 408, the first liquid flow path 406, the pressurizing chamber 405, the second liquid flow path 407, and the second liquid chamber 409 are formed on the substrate 402. Further, the width and the length of the first liquid flow path 406 are set at 25 $\mu$m and 20 $\mu$m, respectively. Still further, the width and the length of the second liquid flow path 407 are set at 25 $\mu$m and 150 $\mu$m, respectively.

By laminating the upper substrate 401, being a glass substrate, onto the substrate 402, upper surfaces of the first liquid chamber 408, the first liquid flow path 406, the second liquid chamber 409, and the second liquid flow path 407 are formed. A portion of the upper substrate 401, corresponding to the upper surface of the pressurizing chamber 405, is formed as a through hole by applying the etching treatment, etc.

The vibration plate 403, made of a thin glass plate having a thickness of 50 $\mu$m, is laminated onto the upper surface of the upper substrate 401, and further, the piezoelectric element 404, made of a lead zirconite titanate ceramic (PZT), etc., is laminated and attached onto the vibration plate 403. By applying the driving voltage fed from the driving section, the piezoelectric element 404 and the vibration plate 403 attached to the piezoelectric element 404 are vibrated, so as to change the volume of the pressurizing chamber 405 between increase and decrease.

The width and the depth of the first liquid flow path 406 are the same as those of the second liquid flow path 407, and the length of the second liquid flow path 407 is longer than that of the first liquid flow path 406. Accordingly, as for the first liquid flow path 406, when the differential pressure between the coupled chambers is getting large, turburent flows are generated at the inlet/outlet openings of the liquid flow path and its peripheral, resulting in an increase of the liquid flow path resistance. On the other hand, as for the second liquid flow path 407, even when the differential pressure between the coupled chambers is getting large, laminar flows are liable to occur since the length of the liquid flow path is relatively long. Accordingly, the variation ratio of the liquid flow path resistance versus the change of the differential pressure is getting small, compared to that for the first liquid flow path 406. In other words, the relationship between the flowing impedances of the first liquid flow path 406 and the second liquid flow path 407 varies with the amplitudes of the differential pressures. Utilizing the abovementioned phenomenon, the liquid transporting operation can be achieved by controlling the waveform of the driving voltage to be applied to the piezoelectric element 404.

For instance, in order to transport the liquid in a direction from the pressurizing chamber 405 to the second liquid chamber 409 (direction B shown in Fig. 4(a)), the vibration plate 403 is swiftly deformed towards the inner direction of the pressurizing chamber 405 by applying the driving voltage having the corresponding waveform to the piezoelectric element 404, so as to reduce the volume of the pressurizing chamber 405 while giving a large differential pressure, and successively, the vibration plate 403 is slowly deformed towards the outer direction from the pressurizing chamber 405, so as to increase the volume of the pressurizing chamber 405 while giving a small differential pressure.

On the contrary, in order to transport the liquid in a direction from the pressurizing chamber 405 to the first liquid chamber 408 (direction A shown in Fig. 4(a)), the vibration plate 403 is swiftly deformed towards the outer direction from the pressurizing chamber 405, so as to increase the volume of the pressurizing chamber 405 while giving a large differential pressure, and successively, the vibration plate 403 is slowly deformed towards the inner direction of the pressurizing chamber 405, so as to decrease the volume of the pressurizing chamber 405 while giving a small differential pressure.

In this connection, the difference between the variation ratios of the liquid flow path resistances of the first liquid flow path 406 and the second liquid flow path 407 is not necessary depending on the difference between the lengths of both liquid flow paths, but may be depending on another dimensional difference between them.

According to the micro pump 211 configured as mentioned in the above, by changing the pump driving voltage and its frequency, it becomes possible to control the liquid transporting direction and velocity of the liquid desired. A port coupled to the driving liquid tank 215 is equipped in the first liquid chamber 408, though that is not shown in Fig. 4(a) and Fig. 4(b). This port serves as a "reservoir" to receive the driving liquid 216 fed from the driving liquid tank 215. The second liquid chamber 409 forms a liquid flow path of the micro pumping unit 210 and is coupled to the inspection chip 100 through the chip connecting section 213 disposed thereupon.

As shown in Fig. 4(c), the micro pump 211 is constituted by a silicon substrate 471, the piezoelectric element 404, a substrate 474 and a flexible wiring (not shown in the drawings). The silicon substrate 471 is manufactured by employing the Photolithography technology to form a silicon wafer into a predetermined shape, on which the pressurizing chamber 405, the vibration plate 403, the first liquid flow path 406, the first liquid chamber 408, the second liquid flow path 407 and the second liquid chamber 409 are fabricated by applying the etching treatment. When implementing the driving action, the inner sections of the 405, the first liquid flow path 406, the second liquid flow path 407, the first liquid chamber 408, and the second liquid chamber 409 are filled with the driving liquid 216.

A port 472 and a port 473 are formed on the upper section of the first liquid chamber 408 and the upper section of the second liquid chamber 409, respectively. For instance, when the micro pump 211 and the inspection chip 100 are made to be separate elements, it is possible to make them communicate with each other through the port 473, by coupling the port 473 to the pump connecting section of the inspection chip 100. Concretely speaking, for instance, by overlapping the port 472 and the port 473 formed on the substrate 474 with the areas adjacent to the pump connecting sections of the inspection chip 100 in an upper/lower direction, the micro pump 211 can be coupled to the inspection chip 100.

Further, as mentioned in the above, since the micro pump 211 is fabricated on the silicon wafer formed in a predetermined shape by employing the Photolithography technology, it is possible to form a plurality of micro pumps 211 on a single silicon substrate. In this case, it is desirable that the driving liquid tank 215 is coupled to the port 472 disposed opposite to the port 473 that is to be coupled to the inspection chip 100. When plural micro pumps 211 exist, it is also applicable that plural ports 472 of them are coupled to the common driving liquid tank 215.

Since the micro pump 211, described in the foregoing, is small shaped, and makes a redundant volume, due to the pipeline from the micro pump 211 to the inspection chip 100, etc., minimum, and generates a little pressure fluctuation, and makes it possible to instantaneously and accurately control the liquid emission pressure, it becomes possible for the drive controlling section 270 to accurately conduct the liquid transportation controlling operation.

According to the first embodiment of the inspection chip 100 described in the foregoing, since the sample liquid 301, such as a specimen, a reagent, etc., is injected into the sample liquid injecting section 111 through the sample liquid injection opening 117, and the sample liquid 301 injected into the sample liquid injecting section 111 is conveyed by employing the first pump 211a so as to accommodate the sample liquid 301 into the sample liquid reservoir 121, and then, the sample liquid 301 accomodated in the sample liquid reservoir 121 is further conveyed downstream by employing the second pump 211b, it becomes possible to stabilize the liquid transportation amount and the liquid transporting velocity of the sample liquid 301 to be conveyed downstream, even if the dripping amount of the sample liquid 301 varies at the time of injecting the sample liquid.

Further, when the sample liquid 301, accommodated in the sample liquid reservoir 121, is conveyed downstream by employing the second pump 211b, by employing the first pump 211a to apply a pressure onto the sample liquid injecting section 111, it becomes possible not only to prevent the sample liquid 301 from flowing backward to the sample liquid injecting section 111, but also to stabilize the liquid transportation amount and the liquid transporting velocity of the sample liquid 301 to be conveyed downstream.

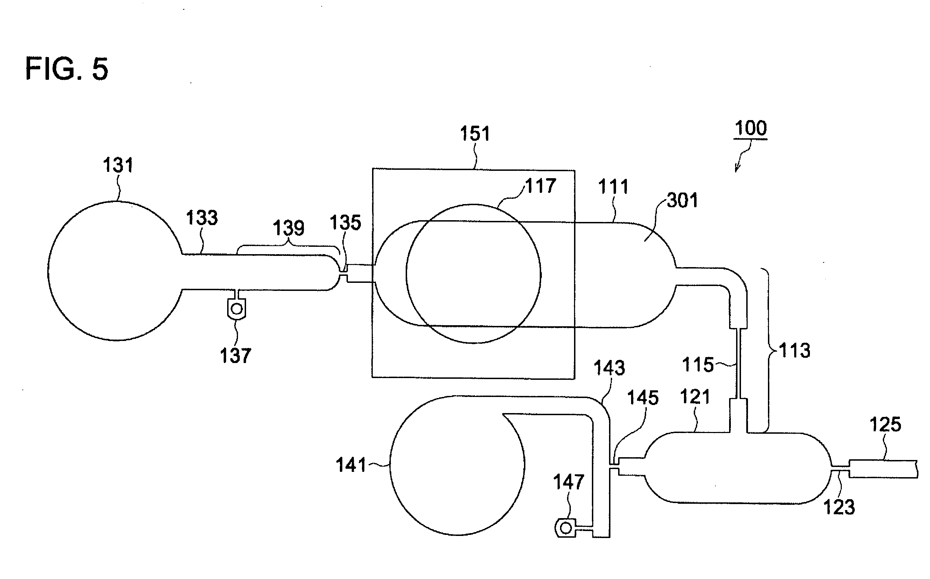

Next, referring to Figs. 5 - 7, the second embodiment of the inspection chip 100 will be detailed in the following. Figs. 5 - 7 show schematic diagrams of the inspection chip 100, respectively indicating examples 1 - 3 of the second embodiment.

In the example shown in Fig. 5, being different from the first embodiment shown in Fig. 2, the air drain section 137 of the first driving liquid flowing path 133 is disposed at a position located in mid-course of the first driving liquid flowing path 133, instead of the end portion of the first driving liquid flowing path 133, and further, an air chamber 139, having a constant capacity, is disposed at a position between the air drain section 137 and the sample liquid injecting section 111. With this configuration, since a constant volume of the air can be maintained within a gap between the driving liquid 216 and the sample liquid 301, it becomes possible to prevent the sample liquid 301 from mingling with the driving liquid 216. This is effective for solving such a problem that density and characteristic changes, which occur at the most end portion of sample liquid 301 and are caused by the fact that the driving liquid 216 and the sample liquid 301 mingle with each other, possibly affect the result of the analysis currently performed.

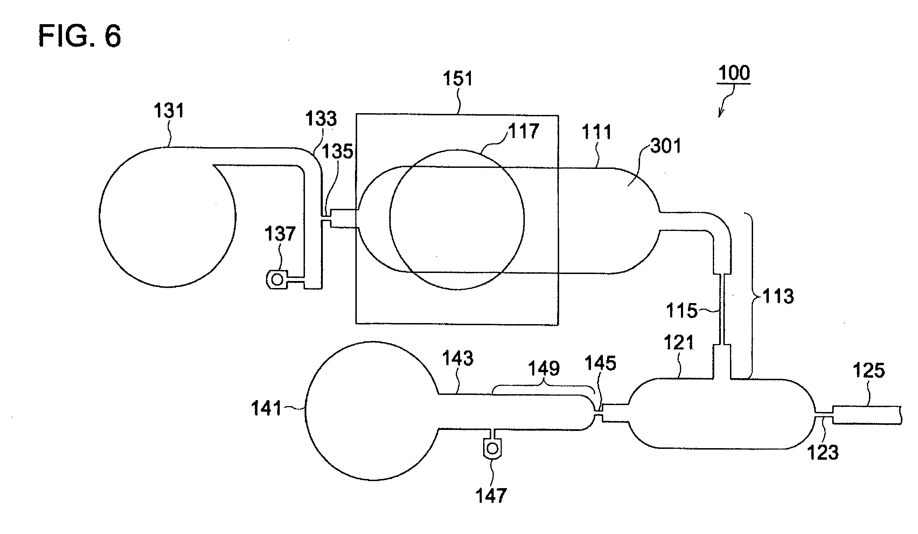

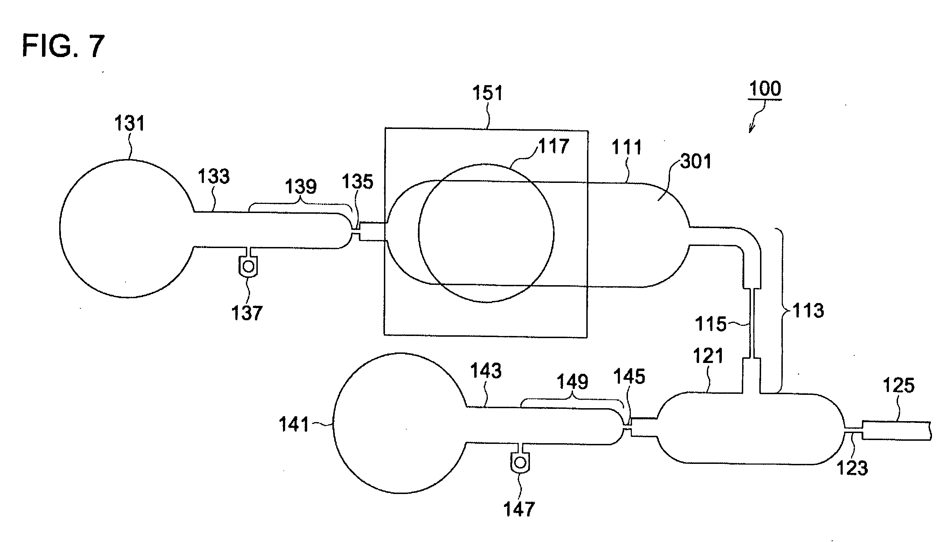

It is applicable that the air chamber(s) are disposed at both the upstream side of the sample liquid injecting section 111 and the other upstream side of the sample liquid reservoir 121, or is disposed at any one of them. Fig. 5 shows a first example in which the air chamber 139 is disposed at the upstream side of the sample liquid injecting section 111, Fig. 6 shows a second example in which an air chamber 149 is disposed at the upstream side of the sample liquid reservoir 121 and Fig. 7 shows a third example in which the air chamber 139 and the air chamber 149 are disposed at the upstream side of the sample liquid injecting section 111 and the other upstream side of the sample liquid reservoir 121, respectively.

In this connection, in the second embodiment, it is necessary that the capacity of the air chamber 139 or 149 should be determined by compromising the condition that the driving liquid 216 and the sample liquid 301 do not mingle with each other, with the other condition that the air dumper does not become excessively large. In the present embodiment, it is preferable that the capacity of the air chamber is set at a value in a range of around 1 - 15 nm$^3$.

According to the second embodiment of the inspection chip 100 described in the foregoing, by maintaining a constant volume of the air within a gap between the driving liquid 216 and the sample liquid 301, it becomes possible to prevent the sample liquid 301 from mingling with the driving liquid 216 during the liquid transporting operation, and therefore, it becomes possible to prevent the density and characteristic changes, which occur at the most end portion of sample liquid 301 and are caused by the fact that the driving liquid 216 and the sample liquid 301 mingle with each other.

As mentioned in the foregoing, according to the present invention, by injecting the sample, such as a specimen, a reagent, etc., into the sample liquid injecting section from the sample liquid injection opening, and transporting the sample injected into the sample liquid injecting section so as to accommodate it into the sample liquid reservoir, and then, conveying downstream the sample accommodated into the sample liquid reservoir, it becomes possible not only to stabilize the liquid transportation amount and the liquid conveying velocity of the sample liquid, but also to provide the micro total analysis chip and the micro total analysis system, each of which makes it possible to improve the accuracy of analysis concerned.

According to the present invention, by injecting the sample, such as a specimen, a reagent, etc., into the sample liquid injecting section from the sample liquid injection opening, and transporting the sample injected into the sample liquid injecting section so as to accommodate it into the sample liquid reservoir, and then, conveying downstream the sample accommodated into the sample liquid reservoir, it becomes possible not only to stabilize the liquid transportation amount and the liquid conveying velocity of the sample liquid, but also to provide the micro total analysis chip and the micro total analysis system, each of which makes it possible to improve the accuracy of analysis concerned.

**Claims**

1. A micro total analysis chip, comprising:

   a first connecting section (131) to connect with a first liquid conveying device (211a) for conveying a liquid;
   a sample liquid injecting section (111) that is coupled to a downstream side of the first connecting section (131) and has a sample liquid injection opening (117) to inject a sample liquid (301) from an outside;
   a first sample liquid conveying path (113), which is coupled to a downstream side of the sample liquid injecting section (111), and through which the sample liquid (301) injected into the sample liquid injecting section (111) is conveyed;
   a second connecting section (141) to connect with a second liquid conveying device (211b) for conveying another liquid;
   a sample liquid reservoir (121) that is coupled to the second connecting section (141) and a downstream side of the first sample liquid conveying path (113), so as to accommodate the sample liquid (301) conveyed through the first sample liquid conveying path (113); and
   a second sample liquid conveying path (125), which is coupled to a downstream side of the sample liquid reservoir (121), and through which the sample liquid (301) accommodated in the sample liquid reservoir (121) is to be conveyed in a downstream direction,
   wherein a capacity of the sample liquid injecting section (111) is greater than that of the sample liquid reservoir (121).

2. The micro total analysis chip (100) recited in claim 1, **characterized by** further including:

   a first water repellent valve (145) that is disposed between the sample liquid reservoir (121) and the second connecting section (141); and
   a second water repellent valve (123) that is disposed between the sample liquid reservoir (121) and the second sample liquid conveying path (125).

3. The micro total analysis chip (100) recited in claim 1 or 2, **characterized by** further including:

   a high resistance section (115) that is disposed at the first sample liquid conveying path (113), to prevent the sample liquid (301) accommodated in the sample liquid reservoir (121) from flowing backward to the sample liquid injecting section (111) when the second liquid conveying device (211b) conducts a liquid conveying operation.

4. The micro total analysis chip (100) recited in any one of claims 1 to 3, **characterized by** further including:

   an air drain section (137,147) for draining a part of air or all of the air residing in at least one of gaps, between the first connecting section (131) and the sample liquid injecting section (111), and between the second connecting section (141) and the sample liquid reservoir (121).

5. A micro total analysis system, comprising:

a first liquid conveying device (211a) to convey a liquid;

a second liquid conveying device (211b) to convey another liquid; and

a micro total analysis chip (100) according to any one of claims 1 to 4 that is connected to both the first liquid conveying device (211a) and the second liquid conveying device (211b) such that the first connecting section (131) is connected with the first liquid conveying device (211a) and the second connecting section (141) is connected with the second liquid conveying device (211b),

wherein the arrangement is such that, after the sample liquid (301) injected into the sample liquid injecting section (111) from the sample liquid injection opening (117) by the first liquid conveying device (211a) has been accommodated into the sample liquid reservoir (121) through the first sample liquid conveying path (113), the second liquid conveying device (211b) is adapted to convey the sample liquid (301) accommodated in the sample liquid reservoir (121) in the downstream direction through the second sample liquid conveying path (125), and

wherein, where the capacity of the sample liquid injecting section (111) is greater than that of the sample liquid reservoir (121), the arrangement is such that the sample liquid reservoir (121) can be fully filled with the sample liquid (301) as a result of a liquid conveying operation conducted by the first liquid conveying device (211a).

6. The micro total analysis system recited in claim 5, **characterized in that**

where the micro total analysis chip (100) includes the first water repellent valve (145) that is disposed between the sample liquid reservoir (121) and the second connecting section (141) and the second water repellent valve (123) that is disposed between the sample liquid reservoir (121) and the second sample liquid conveying path (125),

the arrangement is such that, when the first liquid conveying device (211a) conducts a liquid conveying operation, the first liquid conveying device (211a) conveys the sample liquid (301) with a liquid conveying pressure being lower than a liquid retaining force generated by each of the first water repellent valve (145) and the second water repellent valve (123), so as to fully fill the sample liquid reservoir (121) with the sample liquid (301).

7. The micro total analysis system recited in claim 5 or 6, **characterized in that**

where the micro total analysis chip includes the high resistance section (115) that is disposed at the first sample liquid conveying path (113),it is adapted to prevent the sample liquid (301) accommodated in the sample liquid reservoir (121) from flowing backward to the sample liquid injecting section when the second liquid conveying device (211b) conducts a liquid conveying operation.

8. The micro total analysis system recited in any one of claims 5 to 7, **characterized in that** the arrangement is such that, when the sample liquid (301) accommodated in the sample liquid reservoir (121) as a result of a liquid conveying operation conducted by the second liquid conveying device (211b) is conveyed in the downstream direction through the second sample liquid conveying path (125), the first liquid conveying device (211a) is adapted to be operated with a liquid conveying pressure being lower than that of the second liquid conveying device (211b), so as to prevent the sample liquid (301) accommodated in the sample liquid reservoir (121) from flowing backward to the sample liquid injecting section (111).

9. The micro total analysis system recited in any one of claims 5 to 8, **characterized in that**

at least one of the first liquid conveying device (211a) and the second liquid conveying device (211b) is a micro pump that employs a driving liquid to conduct a liquid conveying operation.

**Patentansprüche**

1. Ein Gesamtmikroanalysechip, mit:

einem ersten Verbindungsabschnitt (131) zum Verbinden mit einer ersten Flüssigkeits-Fördereinrichtung (211a) zum Fördern einer Flüssigkeit,

einem Probenflüssigkeits-Einspritzabschnitt (111), der mit einer stromabwärtigen Seite des ersten Verbindungsabschnitts (131) gekoppelt ist und eine Probenflüssigkeits-Einspritzöffnung (117) zum Einspritzen einer Probenflüssigkeit (311) an einer Außenseite besitzt,

einem ersten Probenflüssigkeits-Förderweg (113), der mit einer stromabwärtigen Seite des Probenflüssigkeits-Einspritzabschnitts (111) gekoppelt ist und durch welchen die Probenflüssigkeit (301), die in den Probenflüssigkeits-Einspritzabschnitt (111) eingespritzt wurde, gefördert wird,

einem zweiten Verbindungsabschnitt (141) zum Verbinden mit einer zweiten Flüssigkeits-Fördereinrichtung (211b) zum Fördern einer anderen Flüssigkeit,

einem Probenflüssigkeitsreservoir (121), das mit dem zweiten Verbindungsabschnitt (141) und einer stromabwärtigen Seite des ersten Probenflüssigkeits-Förderwegs (113) gekoppelt ist, um die Probenflüssigkeit (301), die durch den ersten Probenflüssigkeits-Förderweg (113) gefördert wurde, aufzunehmen, und

einem zweiten Probenflüssigkeits-Förderweg (125), der mit einer stromabwärtigen Seite des Probenflüssigkeitsreservoirs (121) gekoppelt ist und durch welchen die in dem Probenflüssigkeitsreservoir (121) aufgenommene Probenflüssigkeit (301) in einer Stromabwärtsrichtung zu fördern ist,

wobei eine Kapazität des Probenflüssigkeits-Einspritzabschnitts (111) größer ist als die des Probenflüssigkeitsreservoirs (121).

2. Der Gesamtmikroanalysechip (100) gemäß Anspruch 1, **dadurch gekennzeichnet, dass** er ferner aufweist:

ein erstes wasserabweisendes Ventil (145), das zwischen dem Probenflüssigkeitsreservoir (121) und dem zweiten Verbindungsabschnitt (141) angeordnet ist, und

ein zweites wasserabweisendes Ventil (123), das zwischen dem Probenflüssigkeitsreservoir (121) und dem zweiten Probenflüssigkeits-Förderweg (125) angeordnet ist.

3. Der Gesamtmikroanalysechip (100) gemäß Anspruch 1 oder 2, **dadurch gekennzeichnet, dass** er ferner aufweist:

einen Hochwiderstandsabschnitt (115), der an dem ersten Probenflüssigkeits-Förderweg (113) angeordnet ist, um ein Zurückströmen der in dem Probenflüssigkeitsreservoir (121) aufgenommenen Probenflüssigkeit (301) zu dem Probenflüssigkeits-Einspritzabschnitt (111) zu verhindern, wenn die zweite Flüssigkeits-Fördereinrichtung (211d) einen Flüssigkeitsfördervorgang ausführt.

4. Der Gesamtmikroanalysechip (100) gemäß einem der Ansprüche 1 bis 3, **dadurch gekennzeichnet, dass** er ferner aufweist:

einen Luft-Drainageabschnitt (137,147) zum Ablassen eines Teils der Luft oder der gesamten Luft, die in mindestens einem von Zwischenräumen, zwischen dem ersten Verbindungsabschnitt (131) und dem Probenflüssigkeits-Einspritzabschnitt (111) bzw. zwischen dem zweiten Verbindungsabschnitt (141) und dem Probenflüssigkeitsreservoir (121), vorhanden ist.

5. Ein Gesamtmikroanalysesystem, mit:

einer ersten Flüssigkeits-Fördereinrichtung (211a) zum Fördern einer Flüssigkeit,

einer zweiten Flüssigkeits-Fördereinrichtung (211b) zum Fördern einer anderen Flüssigkeit, und

einem Gesamtmikroanalysechip (100) gemäß einem der Ansprüche 1 bis 4, der sowohl mit der ersten Flüssigkeits-Fördereinrichtung (211a) als auch mit der zweiten Flüssigkeits-Fördereinrichtung (211b) so verbunden ist, dass der erste Verbindungsabschnitt (131) mit der ersten Flüssigkeits-Fördereinrichtung (211a) verbunden ist und der zweite Verbindungsabschnitt (141) mit der zweiten Flüssigkeits-Fördereinrichtung (211b) verbunden ist,

wobei die Anordnung so ist, dass, nachdem die von der Probenflüssigkeits-Einspritzöffnung (117) durch die erste Flüssigkeits-Fördereinrichtung (211a) in den Probenflüssigkeits-Einspritzabschnitt (111) eingespritzte Probenflüssigkeit (301) über den ersten Probenflüssigkeits-Förderweg (113) in dem Probenflüssigkeitsreservoir (121) aufgenommen worden ist, die zweite Flüssigkeits-Fördereinrichtung (211b) eingerichtet ist, die in dem Probenflüssigkeitsreservoir (121) aufgenommene Probenflüssigkeit (301) über den zweiten Probenflüssigkeits-Förderweg (125) in der stromabwärtigen Richtung zu fördern, und

wobei, wenn die Kapazität des Probenflüssigkeits-Einspritzabschnitts (111) größer ist als die des Probenflüssigkeitsreservoirs (121), die Anordnung so ist, dass das Probenflüssigkeitsreservoir (121) als Ergebnis eines von der ersten Flüssigkeits-Fördereinrichtung (211a) ausgeführten Flüssigkeits-Fördervorgangs vollständig mit der Probenflüssigkeit (301) gefüllt werden kann.

6. Das Gesamtmikroanalysesystem gemäß Anspruch 5, **dadurch gekennzeichnet, dass**
wenn der Gesamtmikroanalysechip (100) das erste wasserabweisende Ventil (145), das zwischen dem Probenflüssigkeitsreservoir (121) und dem zweiten Verbindungsabschnitt (141) angeordnet ist, und das zweite wasserabweisende Ventil (123), das zwischen dem Probenflüssigkeitsreservoir (121) und dem zweiten Probenflüssigkeits-Förderweg (125) angeordnet ist, aufweist,
die Anordnung so ist, dass, wenn die erste Flüssigkeits-Fördereinrichtung (211a) einen Flüssigkeits-Fördervorgang ausführt, die erste Flüssigkeits-Fördereinrichtung (211a) die Probenflüssigkeit (301) mit einem Flüssigkeits-Förderdruck fördert, der niedriger ist als eine Flüssigkeits-Rückhaltekraft, die von jedem von dem ersten wasserabweisenden Ventil (145) und dem zweiten wasserabweisenden Ventil (123) erzeugt wird, damit das Probenflüssigkeitsreservoir (121) vollständig mit der Probenflüssigkeit (301) gefüllt wird.

**7.** Das Gesamtmikroanalysesystem gemäß Anspruch 5 oder 6, **dadurch gekennzeichnet, dass** wenn der Gesamtmikroanalysechip den Hochwiderstandsabschnitt (115) aufweist, der an dem ersten Probenflüssigkeits-Förderweg (113) angeordnet ist, es gerichtet ist, zu verhindern, dass die in dem Probenflüssigkeitsreservoir (121) aufgenommene Probenflüssigkeit (301) zu dem Probenflüssigkeits-Einspritzabschnitt zurückströmt, wenn die zweite Flüssigkeits-Fördereinrichtung (211b) einen Flüssigkeits-Fördervorgang ausführt.

**8.** Das Gesamtmikroanalysesystem gemäß einem der Ansprüche 5 bis 7, **dadurch gekennzeichnet, dass** die Anordnung so ist, dass, wenn die in dem Probenflüssigkeitsreservoir (121) infolge eines durch die zweite Flüssigkeits-Fördereinrichtung (211b) ausgeführten Flüssigkeits-Fördervorgangs aufgenommene Probenflüssigkeit (301) über den zweiten Probenflüssigkeits-Förderweg (125) in der stromabwärtigen Richtung gefördert wird, die erste Flüssigkeits-Fördereinrichtung (211a) eingerichtet ist, mit einem Flüssigkeits-Förderdruck betrieben zu werden, der niedriger ist als der der zweiten Flüssigkeits-Fördereinrichtung (211b), um zu verhindern, dass die in dem Probenflüssigkeitsreservoir (121) aufgenommene Probenflüssigkeit (301) zu dem Probenflüssigkeits-Einspritzabschnitt (111) zurückströmt.

**9.** Das Gesamtmikroanalysesystem gemäß einem der Ansprüche 5 bis 8, **dadurch gekennzeichnet, dass** die erste Flüssigkeits-Fördereinrichtung (211a) und/oder die zweite Flüssigkeits-Fördereinrichtung (211b) eine Mikropumpe ist, die eine Antriebsflüssigkeit zum Ausführen eines Flüssigkeits-Fördervorgangs verwendet.

## Revendications

**1.** Micropuce d'analyse totale, comprenant :

une première partie de connexion (131) pour se connecter avec un premier dispositif de transport de liquide (211a) pour transporter un liquide ;
une partie d'injection de liquide d'échantillon (111) qui est couplée à un côté en aval de la première partie de connexion (131) et a une ouverture d'injection de liquide d'échantillon (117) pour injecter un liquide d'échantillon (301) d'un extérieur ;
un premier chemin de transport de liquide d'échantillon (113), qui est couplé à un côté en aval de la partie d'injection de liquide d'échantillon (111), et à travers lequel le liquide d'échantillon (301) injecté dans la partie d'injection de liquide d'échantillon (111) est transporté ;
une deuxième partie de connexion (141) pour se connecter avec un deuxième dispositif de transport de liquide (211b) pour transporter un autre liquide ;
un réservoir de liquide d'échantillon (121) qui est couplé à la deuxième partie de connexion (141) et à un côté en aval du premier chemin de transport de liquide d'échantillon (113), de manière à accueillir le liquide d'échantillon (301) transporté à travers le premier chemin de transport de liquide d'échantillon (113) ; et
un deuxième chemin de transport de liquide d'échantillon (125), qui est couplé à un côté en aval du réservoir de liquide d'échantillon (121), et à travers lequel le liquide d'échantillon (301) accueilli dans le réservoir de liquide d'échantillon (121) doit être transporté dans un sens en aval,
dans laquelle une contenance de la partie d'injection de liquide d'échantillon (111) est supérieure à celle du réservoir de liquide d'échantillon (121).

**2.** Micropuce d'analyse totale (100) selon la revendication 1, **caractérisée en ce qu'**elle comprend en outre :

une première vanne imperméable à l'eau (145) qui est disposée entre le réservoir de liquide d'échantillon (121) et la deuxième partie de connexion (141) ; et
une deuxième vanne imperméable à l'eau (123) qui est disposée entre le réservoir de liquide d'échantillon (121) et le deuxième chemin de transport de liquide d'échantillon (125).

**3.** Micropuce d'analyse totale (100) selon la revendication 1 ou 2, **caractérisée en ce qu'**elle comprend en outre :

une partie de grande résistance (115) qui est disposée au niveau du premier chemin de transport de liquide d'échantillon (113), pour empêcher que le liquide d'échantillon (301) accueilli dans le réservoir de liquide d'échantillon (121) ne s'écoule en arrière vers la partie d'injection de liquide d'échantillon (111) lorsque le deuxième dispositif de transport de liquide (211b) effectue une opération de transport de liquide.

4. Micropuce d'analyse totale (100) selon l'une quelconque des revendications 1 à 3, **caractérisée en ce qu'**elle comprend en outre :

une partie de drainage d'air (137, 147) pour drainer partiellement ou complètement l'air résidant dans au moins l'un d'espacements entre la première partie de connexion (131) et la partie d'injection de liquide d'échantillon (111) et entre la deuxième partie de connexion (141) et le réservoir de liquide d'échantillon (121).

5. Microsystème d'analyse totale, comprenant :

un premier dispositif de transport de liquide (211a) pour transporter un liquide ;
un deuxième dispositif de transport de liquide (211b) pour transporter un autre liquide ; et
une micropuce d'analyse totale (100) selon l'une quelconque des revendications 1 à 4 qui est connectée à la fois au premier dispositif de transport de liquide (211a) et au deuxième dispositif de transport de liquide (211b) de sorte que la première partie de connexion (131) soit connectée au premier dispositif de transport de liquide (211a) et la deuxième partie de connexion (141) soit connectée au deuxième dispositif de transport de liquide (211b),
dans lequel l'agencement est tel que, après que le liquide d'échantillon (301) injecté dans la partie d'injection de liquide d'échantillon (111) à partir de l'ouverture d'injection de liquide d'échantillon (117) par le premier dispositif de transport de liquide (211a) a été accueilli dans le réservoir de liquide d'échantillon (121) à travers le premier chemin de transport de liquide d'échantillon (113), le deuxième dispositif de transport de liquide (211b) est adapté pour transporter le liquide d'échantillon (301) accueilli dans le réservoir de liquide d'échantillon (121) dans le sens en aval à travers le deuxième chemin de transport de liquide d'échantillon (125), et
dans lequel, où la contenance de la partie d'injection de liquide d'échantillon (111) est supérieure à celle du réservoir de liquide d'échantillon (121), l'agencement est tel que le réservoir de liquide d'échantillon (121) peut être complètement rempli de liquide d'échantillon (301) en conséquence d'une opération de transport de liquide effectuée par le premier dispositif de transport de liquide (211a).

6. Microsystème d'analyse totale selon la revendication 5, **caractérisé en ce que** :

où la micropuce d'analyse totale (100) comprend la première vanne imperméable (145) qui est disposée entre le réservoir de liquide d'échantillon (121) et la deuxième partie de connexion (141) et la deuxième vanne imperméable (123) qui est disposée entre le réservoir de liquide d'échantillon (121) et le deuxième chemin de transport de liquide d'échantillon (125),
l'agencement est tel que, lorsque le premier dispositif de transport de liquide (211a) effectue une opération de transport de liquide, le premier dispositif de transport de liquide (211a) transporte le liquide d'échantillon (301) avec une pression de transport de liquide inférieure à une force de rétention de liquide générée par chacune de la première vanne imperméable (145) et de la deuxième vanne imperméable (123), de manière à remplir complètement le réservoir de liquide d'échantillon (121) avec le liquide d'échantillon (301).

7. Microsystème d'analyse totale selon la revendication 5 ou 6, **caractérisé en ce que** :

où la micropuce d'analyse totale comprend la partie de grande résistance (115) qui est disposée au niveau du premier chemin de transport de liquide d'échantillon (113), il est adapté pour empêcher que le liquide d'échantillon (301) accueilli dans le réservoir de liquide d'échantillon (121) ne s'écoule en arrière vers la partie d'injection de liquide d'échantillon lorsque le deuxième dispositif de transport de liquide (211b) effectue une opération de transport de liquide.

8. Microsystème d'analyse totale selon l'une quelconque des revendications 5 à 7, **caractérisé en ce que** l'agencement est tel que, lorsque le liquide d'échantillon (301) accueilli dans le réservoir de liquide d'échantillon (121) en conséquence d'une opération de transport de liquide effectuée par le deuxième dispositif de transport de liquide (211b) est transporté dans le sens en aval à travers le deuxième chemin de transport de liquide d'échantillon (125), le premier dispositif de transport de liquide (211a) est adapté pour fonctionner avec une pression de transport de liquide inférieure à celle du deuxième dispositif de transport de liquide (211b) de manière à empêcher que le liquide d'échantillon (301) accueilli dans le réservoir de liquide d'échantillon (121) ne s'écoule en arrière vers la partie d'injection de liquide d'échantillon (111).

**9.** Microsystème d'analyse totale selon l'une quelconque des revendications 5 à 8, **caractérisé en ce que** au moins l'un du premier dispositif de transport de liquide (211a) et du deuxième dispositif de transport de liquide (211b) est une micropompe qui emploie un liquide d'entraînement pour effectuer une opération de transport de liquide.

# FIG. 1

# FIG. 2

EP 1 935 494 B1

# FIG. 3

FIRST PUMP 211a

2kpa    10kpa    2kpa    8kpa

SECOND PUMP 211b

2kpa    10kpa

T1  T2    T3         T4    T5

EP 1 935 494 B1

# FIG. 4 (a)

# FIG. 4 (b)

# FIG. 4 (c)

FIG. 5

FIG. 6

EP 1 935 494 B1

FIG. 7

EP 1 935 494 B1

**EP 1 935 494 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP TOKKAI2006126206 B